# EUROPEAN PATENT APPLICATION

(11) **EP 1 533 736 A1**
(43) Date of publication of application: **25.05.2005**
(21) Application number: 04386029.5
(22) Date of filing: 26.10.2004
(51) Int. Cl.: G06F 17/60, G06F 17/28

(54) **Automated translation bureau on the internet**

(30) Priority: 24.11.2003 GR 2003100487
(71) Applicant: Lialiaris, Dimitrios, 11362 Attikis (Athens) (GR)
(72) Inventor: Lialiaris, Dimitrios, 11362 Attikis (Athens) (GR)

(57) **Abstract**

Rendering of automated translation services in short time, with receipt and delivery of the text to be translated or edited by email only, to and from the automated translation office at the internet.

The client asks automatically and receives from the system an offer for the translation and editing of his/her text, and, provided that the client agrees to prepay the task by credit card in a secure field of the server with 128bit data encryption, he/she sends the task to the system, and the system forwards the task to the translator, and if asked by the client, the text is forwarded to an editor, before sent back to the client.

Categorization of the translators, editors and marking of these on the basis of the language, subject (text context), quality, quickness and price.

The system, with a fully automated evaluation (score system) locates the relevant translators, editors and assigns the task to be translated to one (1) only translator and one (1) only editor (keeping one (1) runner-up for the secure assignment of the editing).

The translator, or the editor receives the task by an automated email and is informed by SMS (message in the mobile phone), translates, edits and delivers the task to the system, and this in turn forwards it to the client, who is informed at the same time by SMS that the translation is ready and has been sent to his/her mail box. A copy of the translation is automatically saved in the Server.

The translator, the editor, the client and the moderator acquire obligatorily a password, so as to be able to enter the system interface.

## Description

Today, Internet is no longer inaccessible; on the contrary it is an essential innovation, having as basic motivation the need for communication between people and for service rendering, even in the remotest parts of the planet.

The present application concerns an automated communication system by email between the translator, the editor and the client. The present system aims to the employment of an unlimited number of translators and editors living in any part of the world, categorizing them in the database by language, subject (text content, such as legal, technical, etc.), quality, quickness and price. Precondition to this is the connection of the involved persons to the Internet, in order to have access to the Web page of the automated translation office.

The system moderator has registered in advance in the database the lingual combinations of more than 140 languages spoken today, the subject (text content, such as legal, technical text, etc.), as well as the price per lingual combination, so that the system can give information to the client in an automated manner, whenever asked.

The translator and the editor, in order to become accepted by the system, except from the registration of their personal data in the internet work application, such as telephone number, fax, address, email, etc., have also to register in the internet work application, and more specifically in the field «Translation abilities for the translators» and «Editing abilities for the editors» the lingual combination undertaken, the subject (text content, such as legal, technical text, etc.), concerning the quality, the system allows the translator and the editor to give the competence degree (1-5), the daily output in pages (1-50 pages) and the cost. In this manner the categorization of the translators and editors in the database is achived. The client sends the task to the system. From the moment that the system receives the client's text by email, the system chooses automatically the competent and categorized translator and editor on the basis of the lingual combination, of the subject (text content), quality, quickness and price, while the client does not know the translator's or editor's email. These are known only by the system, and the system chooses automatically the email of the translator or the editor, and it forwards the task. At the same time, the system saves the original text in the database (in the Server).

The automated assignment of the task by the system to the translator and the editor and then the forwarding of the translation to the client, without the translator or the editor to know the client's email, this is known only by the system, and the system chooses automatically the client's email, and it forwards the text, while at the same time the system saves the translation in the database (in the Server), as well as the notification of the translator and the editor, and also of the client by email and SMS concerning the task, without human intervention, this process consists the system automation.

This system demands a quick and high demanding Server, in a Secure site, with the following Hardware specifications:
- Server tower
- Rack Server with 2 processors XEON 2.66 MHZ
- Memory 4 GB minimum
- 2-3 disks of 120 GB with their own scasi Controller and continuous upgrade.

The incoming files can be of the following format: pdf, bmp, excel, ppt, cdr, tif, doc, jpg, etc.

The system can be programmed to create daily, weekly and monthly Backup for the files persistence.

The four (4) main categories based on the database are the following:

### 1^{rst} category

**Translator:** in this application, a translator is the person that will translate a text from a language to another. Here the interested persons fill the internet work application that is sent for confirmation to the competent system manager. Provided that the above mentioned provisions are met, the translator is registered automatically in the database of the application, so that the receipt of new tasks for translation can start immediately. Interested persons from all over the world are connected on-line to the system, waiting to receive a new task by email, or on the basis of the email declared they receive automatically an SMS that informs them that there is a new task in their mail-box. In this way there is no need for a continuous connection to the system's website.

The system has the necessary mechanism for the marking of the translator through an automated evaluation (score system). For instance, the system saves registrations for the performance of each translator and decides automatically for the best translator for each task. The most important factor is the number of the tasks that the translator managed to deliver inside the deadline limit. Another important factor is the quality of the translation. The quality is based on the client's comments, and furthermore the system allows the translator to give a competence degree (1-5). The readiness of the response is also a crucial factor for the evaluation of the translator. When the system assigns automatically a task to a translator, the translator has to answer as soon as possible, if he accepts or refuses the task. This is the readiness of the response, that the system takes very seriously into account. According to the translation kind, the system takes different decisions. For instance, for small translations, the system will give greater concern to the readiness of the response, while for larger translations it will give greater concern to the in time delivery performance. Concerning the availability of the translator, the system allows an option of availability or no availability for the undertaking of a new task, and the system comprehends whether it should forward a new task or not.

A significant aim of the system is the categorization of the translators, so that the incoming tasks are sent for translation only to the relevant translators of the asked language and subject (text content, such as legal, technical, etc.), quality, quickness and price.

Prior to the assignment of the task to the translator, the system sends automatically to the translator a ready form (electronic agreement) to sign. As soon as the translator undersigns the ready form (electronic agreement), a copy of the electronic agreement is sent to the system's database and the file that is to be translated is released, so that the chosen translator is able to begin the translation.

If the translator does not wish to undertake or to undersign the agreement form, the system addresses immediately to the next in the list, until a translator accepts to make the translation.

If a client asks for editing of the translation, the text is not sent to the client, but is saved in the database, waiting for the editor who will undertakes its editing.

The translator has an ID (serial identification number).

There is also provided a list of translators, for the immediate finding of the translator by ID, email and name.

The system will send automatically an answering email to the translator by the time of registration (welcome).

By the registration and the entry of the interested person to the system, he/she is automatically granted a Username and a Password, and the access of the interested person to his/her account takes place by the Username and the password.

### 2^{nd} category

**Editor:** in this application an editor is the person who will receive the translation by the system (the text's translation has been previously sent from the translator to the system) so that the editor can edit the translation from a language to another, can correct, add or remove part of the text or finally make any intervention necessary for the correct and objective presentation of the translation to the client. Here, the interested persons will fill an internet work application, which is sent for approval to the competent system manager. Provided that the above mentioned provisions are met, the person is registered automatically in the database of the application, so that the receipt of new tasks for editing can start immediately. Interested persons from all over the world receive automatically an SMS on the basis of the email declared, that informs them that there is a new task for editing in the mail-box. The system has the mechanism necessary for the marking of the editor through an automated evaluation (score system). For instance, the system saves registrations for the performance of each editor and decides automatically for the best editor for each task. The most important factor is the number of the tasks that the editor managed to deliver inside the deadline limit. Another important factor is the quality of the editing. The quality is based on the client's comments, and also the system allows the translator to give a competence degree (1-5). The readiness of the response is also a crucial factor for the editor. When the system assigns automatically a task to an editor, the editor has to answer as soon as possible, to accept or refuse the task. This is the readiness of the response, which the system takes very seriously into account. According to the editing kind, the system takes different decisions. For instance, for small editing, the system will give greater concern to the readiness of the response, while for larger editing it will give greater concern to the in time delivery performance. Concerning the availability of the editor, the system allows an option of availability or no availability for the undertaking of a new task, and the system comprehends whether it should forward a new task or not.

A significant aim of the system is the categorization of the editors, so that the incoming tasks are sent for editing only to the relevant editors of the asked language and subject (text content, such as legal, technical, etc.), quality, quickness and price.

Prior to the assignment of the task to the editor, the system sends automatically to the editor a ready form (electronic agreement) to undersign. As soon as the editor undersigns the ready form (electronic agreement), a copy of the electronic agreement is sent to the system's database and the file that has to be edited is released, so that the chosen editor is able to begin its editing. The advantage is that from the time that the client pays by credit card assigning the task (for translation) to the system, the system sees to locate the translator and at least 2 editors, for reasons of a secure assignment of the editing.

If the two (2) editors do not undersign the agreement, then the system addresses to the immediately next editor, and so on, until an editor undertakes the editing.

The editor has an ID (serial identification number).

Also a list of editors is provided, for the immediate finding of the editor by ID, email and name.

The system will send automatically an answering email to the editor by the registration (welcome). By the registration and the entry of the interested person to the system, he/she is automatically granted a Username and a Password, and the access of the interested person to his/her account takes place by the Username and the password.

### 3^{rd} category

**Client:** in this application a client is any person, natural or legal, that assigns to the system the task (texts) for translation. Here the interested persons from all over the world sent by email the task to be translated to the website 24 hours a day. The Client can ask an offer from the system for the translation of his task. The system, round the clock and in the minimum time, is automatically in position to give the cost and whether there is a translator or editor available. The client will receive the requested offer, irrelevant from the availability of a translator or editor for the lingual combination asked by the client. The client uploads the file, so that the system can calculate the words, and he also informs the system about the desired lingual combination, such as German to Swedish, whether he desires the editing of the translation, and when the client agrees to the received offer, the interested person fills the order form, in order to begin the process of the automated assignment of the task in the system, as well as the payment of the translation by credit card.

The client has an ID (serial identification number).

In the order form, the client will choose the time for the fulfillment of the task, and the system will be informed.

Also a list of clients is provided, for the immediate finding of the client by ID, email and name.

The system will send automatically an answering email to the client as soon as he assigns the task to the system and an SMS when the system sends the final text (translation) to the mail box of the client. By the registration and the entry of the interested person to the system, he is automatically granted a Username and a Password, and the access of the interested person to his/her account takes place by the Username and the password.

### 4^{rt} category

**Moderator:** in this application a moderator is the person that supervises and has access to the previous three (3) categories. The moderator can activate, cancel and moderate the account of the translator, the editor or the client.

Basic aim of the system is to present to the interface of the moderator a concentrated list of the translators, a list of the editors, a list of the clients, a list of the languages, for their immediate finding. A basic point is also the presentation of a concentrated list of the pending tasks (because a translator/ editor has not been found yet by the system), in progress (under translation), completed (delivered). Also a concentrated list with the accounts of the translators, editors that delay to be activated due to lack of data of the translator, editor.

The moderator enters the system interface by giving the Username and the Password.

### Description of the system

The present system aims to the rendering of automated translation services to the interested persons from all over the world, with the gnostic field in all languages spoken today, more than 140 languages.

The Client who wishes the processing of a translation task creates an account in the website, where he fills all the necessary data for his registration to the clients list of the automated translation office at the Internet. Then, he will be instructed to «upload», through a special form, the electronic file to be translated, giving to the system the lingual combination, and whether he wishes the editing of the translation and the delivery deadline for the translation. At that moment the words are calculated automatically and in a very short time, in order to evaluate in advance and accurately the cost for the translation and the cost for the editing, and the client receives also the calculation for the total cost. Provided that the client accepts the offer, the control follows and the transaction takes places automatically, by credit card in a secure field of the server, with a 128bit data encryption. The client will have the possibility to enter the members field, in order to be informed whether the task is ready and to receive it in the same format that was initially sent through the website. If at the time that he enters the member's field the text is not ready yet, he will be informed about the date that this will be available. In the members field, the registered client has further the possibility to change his data, if he considers that necessary. The client that is connected to the automated translation office at the internet gives to the system a task to be translated, such as English to Greek with subject «Legal, technical etc.», and the advantage of the system is that this task will be sent only to the category of translators and editors specialized to legal, technical etc., and the system automatically detects and sends the task by email to one (1) only of the translators that translate legal, technical subjects, etc., sending at the same time an SMS (massage to his/hers mobile phone) informing him/her that there is a new task in the mailbox. It will also inform one (1) only of the editors (with one more runner-up) in standby, for reasons of security.

In spite of the time difference between the various countries, the systems undertakes automatically to choose the translator and editor by an automated evaluation (score system) choosing the translator and editor to sent the task for translation and editing, on the basis of the translation or editing that he/she delivers, the readiness of the response, the quickness in translating or editing, the availability to undertake a new task and the competitiveness of the price he/she has offered in the system, to be preferred by the system in relation to other translators or editors.

In case that the task is not accepted by the first translator or editor chosen by the system, then the system addresses to the next in line, and so on, until the task is undertaken. If no translator or editor can be found, the client's task will be in a standby mode, and the client will be informed automatically and in regular basis from the system by email and SMS.

The translator, from his side, will have access to his/her own individualized account in the website. By the time he/she has a new task, he/she receives an email and SMS in the mobile phone, so that he/she can enter the member's field and receive the task. In case that the dead-line determined by the client is not feasible, the translator informs the system about the deadline that is needed for the completing of the task and the client is informed respectively. The translator has also the possibility to change his/hers personal data, if this is considered necessary. Furthermore, he/she can see the sum of the money gained by his/her activities, as the system informs the translator's cash for each translation with a detailed list of all tasks (with the date of the receipt and delivery of the task from/to the client, the subject of the text, the number of the words and the price per word). After the payment of the translators or the editor, his cash is cleared, but the translator or editor can refer to the archive, to see the cash movement from the time of the beginning of his/her activities.

The editors, from his/hers side, will have access to his/her own individualized account in the website. By the time he/she has a new editing, he/she receives an email and SMS in the mobile phone, so that he/she can enter the member's field and receive the text to be edited. In case that the dead-line determined by the client is not feasible, the editor informs the system about the deadline that is needed for the completing of the task, and the client is informed respectively. The editor has also the possibility to change his/hers personal data, if this is considered necessary. Furthermore, he/she can see the sum of the money gained by his/her activities, the system informs the editors cash for each editing with a detailed list of all tasks, and after the payment the cash is cleared, but the editor can refer to the archive, to see the cash movement from the time of the beginning of his/her activities.

Except from the typical support by the messaging through a communication format, an application of messages exchange takes place between the registered users in a specialized program on the basis of the Trouble ticket Systems philosophy. Here, the registered users can communicate with the system moderator and a messages archive is kept. The client, the translator and the editor can submit to the system moderator a question or an arisen problem and the moderator answers in a short time. All questions and answers are available in the website, and in all related accounts. In this way the client/ translator/ editor can refer to the questions and answers, if he/she addresses a relevant problem in the future. The moderator of this application has access to all of its parts, in order to be able to add or remove immediately and in time possibilities and functions in the website.

Furthermore, the technical support of the application will ensure the normal operation and the avoidance of any problem. Further aim of this practice is to apply the mentality of business automation as a significant component that has to be promoted for time and money saving, especially in the twenty first century.

The Moderator will register in the system more than 140 languages, for the creation of language lists, so that when the client asks a lingual combination, the system can grant automatically this possibility.

The system has the possibility to sent mass emails (of informative or any other professional nature) to the translators and the clients.

The system will present automatically a daily and weekly report of the users' visits, and also the pages of the website seen by the registered users and the time that these stay in the relevant pages.

Except from these above mentioned, the system allows the on-line connection of an unlimited number of translators, who translate in real time the texts and the instant massages. The system can organize real time translations, discussions and translated messages. Two (2) or more people and the translator constitute a live discussion and translation group. The people enter in a specific website, where they start to discuss in written. The written discussion is translated in real time by the translator. In this way, one can see the original text of every message and its translation that follows.

The texts and the messages can be translated in many languages at the same time, making multiple email accounts. This is achieved with an email system, that is on-line (web-based email) and accessible from the website, where many people and translators enter.

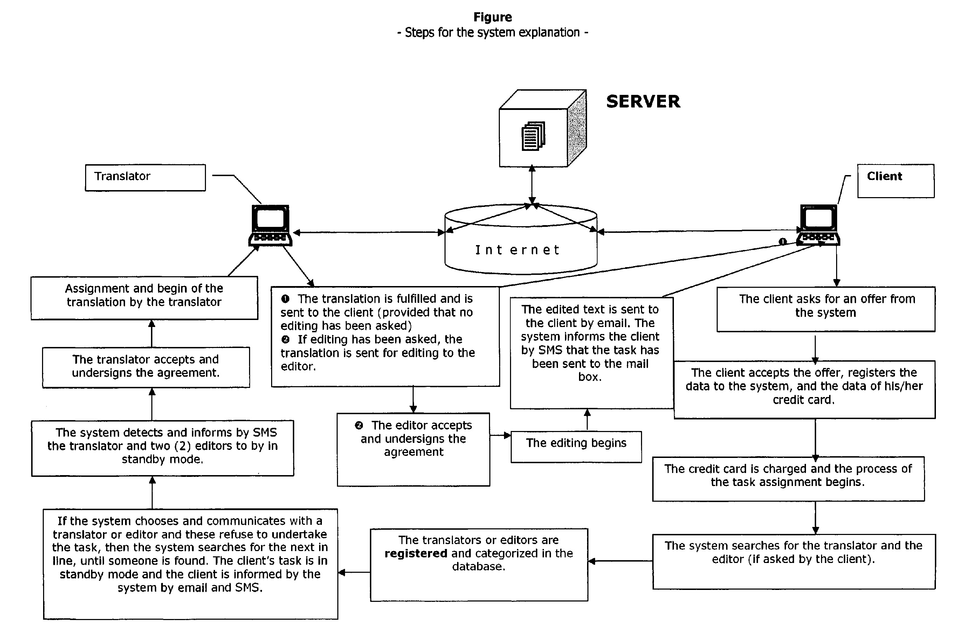

## Claims

1. Automated process of receipt and delivery of tasks to/from the automated translation office at the internet **characterized in that**:
the client asks for an offer, uploading to the system the text, and informing the system about the lingual combination, the system processes automatically the text, by counting the words, the system multiplies the number of the words with the price per word, so that in a few seconds the system informs the interested person about the availability of the lingual combination on the one hand, and about the price cost on the other
the task is registered automatically to the system and remains in a stand-by mode until the system chooses the competent translator
from the group of the translators, the system detects and chooses only one translator and sends him/her an email or SMS (message in the mobile phone), informing him/her that a task has been sent to his/her mail-box. The translator owes to answer inside a specified time period whether he/she accepts the proposed task or not, so, in case that the translator does not wishes to translate the task, the system can detect the next one in line. If a translator that has been chosen by the system does not gives an answer whether he/she accepts the translator or not, the system begins again automatically the process to detect a new translator and also marks the translator who did not answer when the system chose him/her.
in case that the translator accepts to undertake the translation, the client is informed automatically by the system by email and SMS (message in the mobile phone) that the task has already bee forwarded for translation.
as soon as the translator completes the translation, he/she sends it by email to the system, and the system undertakes automatically to forward it to the client, informing the client by SMS (message in the mobile phone) that the task has been fulfilled successfully, and has been sent to his/her mail-box.

2. A process according to Claim 1, where the system categorizes the translators according to the lingual combination, the subject and the price per word. The system also evaluates the translators on the basis of a score system, by choosing the translator to whom it will send the task on the basis of the readiness of the response and the quality of the translation. The quality is marked by the user of the system and will be registered in the system on a number scale, e.g. 1-10. In case that the task is not accepted from the first translator chosen by the system or the translator does not undersign the electronic agreement, then the system addresses to the next translator in line and so on, until the task is assigned to a translator. If, however, is not possible to find a translator, then the client's task will be in a stand-by mode, and the client is informed automatically and in regular periods by email and SMS about the state of his/her task.

3. A process according to Claims 1 and 2, where the client does not know the personal data of the translator, e.g. his/her email, neither the translator knows the personal data of the client e.g. his/her email - These are known by the system alone.

4. A process according to Claims 1 and 3, where the client asks the editing of the translation and the system chooses an editor.

5. A process according to Claim 1, where the client fills the order form, so that the process of the acceptance process for the task by the system, as well as the payment by credit card, in a secure field of the server with a 128bit data encryption. According to the process of Claims 1-4 after the receipt of the offer by the system, the Client is informed by email and SMS (message in the mobile phone) about the assignment and the process of his/her task.

6. A process according to Claims 1, 2, 4 where the registration of the translators and editors in the database precedes the categorization of the same by the system. The translator and the editor will fill all the data necessary for their registration in the automated translation office at the internet.

7. A process according to Claims 1, 2, 4, where an account is created in the website by the Client, where he/she fills all the data necessary for his/her registration in the automated translation office at the internet.

8. A process according to Claims 1, 2, 4, 6 where the translator, the editor and the client acquire a password as soon as the data are registered in the system, and the acquisition of a password by the moderator is also a necessary precondition, for the supervision and the access to the translator's account, and also to the account of the client in real-time.

9. A process according to Claims 1, 2, 4, 6, 8 where, the central system includes a comprehensive list of translators, editors, clients, languages and tasks:
- Comprehensive list of translators, who have been or are going to be activated (pending).
- Comprehensive list of editors, who have been or are going to be activated (pending).
- Comprehensive list of clients, that is the number of clients available in the system.
- Comprehensive list of languages, that is the number of the lingual combinations available in the system.
- Comprehensive list of tasks, that is tasks that are in a standby, process or fulfillment mode.
The system of automated task assignment consists of:
a) The database, where all translators and editors are registered and categorized, and also the client served by the system. The system consists of a) the translator unit, b) the editor unit, c) the client unit, d) the moderator unit.
- The client visits the central webpage of the system, the environment of the order form, the payment and the messages field.
- The translator visits the central webpage of the system, the environment of the data registration form and the messages field.
- The editors visit the central webpage of the system, the environment of the data registration form and the messages field.
- The moderator visits and manages all parts of the system.
